**Europäisches Patentamt**

**European Patent Office**

**Office européen des brevets**

(19)

(11) Veröffentlichungsnummer : **0 042 028**
**B1**

# (12) EUROPÄISCHE PATENTSCHRIFT

(45) Veröffentlichungstag der Patentschrift :
**05.10.83**

(21) Anmeldenummer : **81100986.9**

(22) Anmeldetag : **12.02.81**

(51) Int. Cl.³ : **F 28 F 21/08**

---

(54) **Vorrichtung zum Wärmetausch zwischen einen Ammoniak-Konverter verlassendem Kreislaufgas und Kühlwasser.**

---

(30) Priorität : **14.06.80 DE 3022480**

(43) Veröffentlichungstag der Anmeldung :
**23.12.81 Patentblatt 81/51**

(45) Bekanntmachung des Hinweises auf die Patenterteilung : **05.10.83 Patentblatt 83/40**

(84) Benannte Vertragsstaaten :
**AT BE DE FR GB IT NL**

(56) Entgegenhaltungen :
**DE B 2 330 015**
**DE C 1 751 085**
**DE C 2 007 528**
**FR A 1 573 869**
**GB A 1 182 995**
**US A 3 982 585**
**US A 4 071 083**

(73) Patentinhaber : **Uhde GmbH**
**Deggingerstrasse 10-12 Postfach 262**
**D-4600 Dortmund 1 (DE)**

(72) Erfinder : **Marsch, Dieter Hans, Dipl.-Ing.**
**Overhoffstrasse 193**
**D-4600 Dortmund 76 (DE)**
Erfinder : **Brieke, Hans-Günther**
**Niederhofener Strasse 46**
**D-4600 Dortmund 30 (DE)**

(74) Vertreter : **Patentanwälte Meinke und Dabringhaus**
**Dipl.-Ing. J. Meinke Dipl.-Ing. W. Dabringhaus**
**Westenhellweg 67**
**D-4600 Dortmund 1 (DE)**

---

Vorrichtung zum Wärmetausch zwischen einen Ammoniak-Konverter verlassendem Kreislaufgas und Kühlwasser

Die Erfindung richtet sich auf eine Vorrichtung zum Wärmetausch zwischen einen $NH_3$-Konverter verlassendem Kreislaufgas und Wasser, mit vom Kreislaufgas durchströmten Wärmetauscherrohren, die gasdicht an einem mit einer Plattierung versehenen, die Vorrichtung in eine druckfeste Vorkammer und eine Wärmetauscherkammer teilenden Rohrboden verbunden sind, mit einer das heiße Kreislaufgas dem Rohrboden zuführenden, von kaltem Kreislaufgas außengekühlten Glocke.

Zur Wirkungsgradsteigerung von Wärmetauschern, insbesondere auch zur besseren Wärmerückgewinnung von bei Prozessen anfallender Wärme, ist man bestrebt, den Wärmetausch bei möglichst hohen Eingangstemperaturen des die Wärme abgebenden Mediums durchzuführen. Bei der Ammoniaksynthese ist man bestrebt, den Wärmetausch möglichst bei der Betriebstemperatur der Reaktoren selbst durchzuführen, was dadurch erreichbar ist, daß im Reaktor auf einen Wärmetausch verzichtet wird, so daß Temperaturen von etwa 480 °C am Wärmetauschereintritt erreichbar sind. Die heißen, stickstoffhaltigen und/oder Stickstoffverbindungen enthaltenden Gase stellen auch bei den herrschenden Betriebsdrücken besondere Anforderungen an den entsprechenden Wärmetauscher.

Aus der DE-C-20 07 528 ist eine Vorrichtung der eingangs bezeichneten Art bekannt, bei der ein auf der Gaseintrittsseite mit einer nitrierbeständigen Beschichtung versehener Rohrboden von Wärmetauscherrohren aus nitrierbeständigem Material, z. B. aus Stahl mit 32 % Ni und 20 % Cr, eingewalzt sind. Diese Stahl-Wärmetauscherrohre wurden mit der Rohrbodenplattierung verschweißt.

In der DE-B-23 30 015 der Anmelderin sind gasführende, als Verbundrohre bezeichnete Wärmetauscherrohre beschrieben, die aus einem Innenrohr und einem Außenrohr gebildet sind, wobei das Innenrohr aus einem gegen Alkalikorrosion beständigen Austenit oder hochnickelhaltigem Stahl und das Außenrohr aus ferritischem Kesselbaustahl bestehen. Diese Rohre sind in den beiden Rohrbodenplatten auf deren Vorderseite eingeschweißt.

Zwar widerstehen derartige Wärmetauscherrohre der Gefahr des Aufnitrierens der verwendeten Stähle, d. h. der Bildung von Rissen oder Abplatzungen, jedoch haben derartige Stähle den Nachteil, daß sie eine besonders hohe Qualität des zu verdampfenden Wassers zwingend erforderlich machen, um Schäden durch Spannungsriß-Korrosion zu vermeiden. Die Bereitstellung von Wasser sehr hoher Qualität ist nicht immer gewährleistet und zum anderen ausgesprochen teuer, ebenso wie die Verwendung der ausreichend nitrierbeständigen Werkstoffe als Wärmetauscherrohrmaterial.

Aufgabe der Erfindung ist daher die Schaffung einer Lösung, mit der eine Vorrichtung geschaffen wird, bei der die mit dem sehr heißen Gas beaufschlagten Vorrichtungsteile ausreichend gegen eine unzulässige Nitrierung geschützt sind, andererseits auch die dem Wasser zugewandten Vorrichtungsteile ausreichend gegen Korrosion geschützt sind.

Bei einer Vorrichtung der eingangs bezeichneten Art wird diese Aufgabe gemäß der Erfindung dadurch gelöst, daß als Wärmetauscherrohre solche aus ferritischem Stahl verwendet werden, die bis zur Rückseite des Rohrbodens als Verbundrohre mit einer nitrierbeständigen Innenbeschichtung versehen sind, wobei die Wärmetauscherrohre auf der Rückseite des Rohrbodens mit diesem verschweißt sind und jede Rohrbodenbohrung des Heißgaseintrittsbereiches ebenfalls mit der Beschichtung aus nitrierbeständigem Werkstoff versehen ist.

Durch die Erfindung wird zum einen der Heißgaseintritt in die Wärmetauscherrohre bzw. in die Bohrungen des sehr dickwandigen Rohrbodens gegen Nitrierung geschützt, andererseits erreicht man durch Wärmetauscherrohre aus ferritischem, im Kesselbau üblichem Stahl, daß die Korrosionsgefahr vermeidbar ist, und zwar zu wirtschaftlich vertretbaren Bedingungen.

Die sogenannte Hinterbodenschweißung von Wärmetauscherrohren bei dünnen Rohrböden ist an sich bekannt, bei dickwandigen Rohrböden wurde sie bisher jedoch noch nicht eingesetzt.

In Ausgestaltung sieht die Erfindung vor, daß als nitrierbeständige Beschichtung eine Schutzhülse aus nitrierbeständigem Werkstoff in die Rohrbodenbohrung eingeführt ist, die einen geringeren Außendurchmesser als die Rohrbodenbohrung aufweist, und daß der Ringraum zwischen der Rohrbodenbohrungswand und der Schutzhülse mit einer Wärmeisolierung ausgefüllt ist. Diese erfindungsgemäße Maßnahme führt bei einer Vorrichtung der eingangs bezeichneten Art bereits zu einer Vergleichmäßigung der Temperaturverteilung innerhalb des sehr stark dimensionierten Rohrbodens.

Nach der Erfindung ist auch vorgesehen, daß die Schutzhülse mit der Wärmeisolierung bis in die Wärmetauscherrohre ragt, d. h. regelmäßig wenigstens geringfügig länger ist als die Dicke des Rohrbodens, so daß die Isolierwirkung bis über den Verbindungsbereich zwischen Rohrboden und Wärmetauscherrohr zum Tragen kommt.

In weiterer Ausgestaltung sieht die Erfindung vor, daß die Schutzhülse mit der Wärmeisolierung bis in dieses Verbundrohr reicht.

Verbundrohre aus unterschiedlichen Werkstoffen sind bekannt. Ihr Einsatz stieß bisher aber auf die Schwierigkeit, die eine Schicht des Rohres mit dem dicken ferritischen Teil des Rohrbodens und die andere Schicht mit der nitrierbeständigen Plattierung des Bodens verbinden zu müssen, was aufgrund der erfindungsgemäßen Ausgestaltung vollständig vermieden wird.

In zweckmäßiger Ausgestaltung ist zusätzlich noch vorgesehen, daß zur ferritischen Verbindbarkeit des Verbundrohres mit dem Rohrboden die Beschichtung des Verbundrohres in der Montagelage im Verbindungsnahtbereich abgearbeitet ist und dieser Bereich in der Gebrauchslage von der Wärmeisolierung überdeckt ist. Bei der Verbindung von Rohrboden und Wärmetauscherrohr stehen sich daher in der Verbindungsnahtwerkstoffgleiche Materialien gegenüber, so daß sich diese in der Bodenschweißung problemlos durchführen läßt.

Nach der Erfindung ist auch vorgesehen, daß die Wärmetauscherrohre bis zur Stelle der für die Nitrierung unterkritischen Wandtemperatur als Verbundrohre ausgebildet sind. Diese unterkritische Temperatur liegt etwa im Bereich von 350 °C.

Um zu erreichen, daß die, insbesondere bei Lastwechsel, auftretenden starken Schwankungen der Temperatur in dem dickwandigen Rohrboden nicht zu Schäden führen und um eine Vergleichmäßigung der Temperaturverteilung sowohl in axialer als auch in radialer Richtung innerhalb dieses Rohrbodens zu erreichen, der einmal den heißen Prozeßgasen auf der einen und der Wassertemperatur auf der anderen Seite ausgesetzt ist, sieht die Erfindung in wesentlicher Ausgestaltung auch vor, daß der Rohrboden mit einer Kaltgas-Leitkammer versehen ist und die Glocke mit der Leitkammerwand gasdicht verschweißt ist, wobei in der Gebrauchslage die von Heißgas beaufschlagten Rohrbodenbohrungen mit entsprechenden Bohrungen in der Leitkammerwand gasdicht verbunden sind. Die erfindungsgemäße Kaltgas-Leitkammer bewirkt, daß ein Teil des gekühlten Kreislaufgases an der heißen Seite des Rohrbodens entlang streicht und diesen etwa auf der Temperatur hält, auf der sich auch die wasserseitige Wand des Rohrbodens befindet, so daß es zu einer Vergleichmäßigung des Temperaturverlaufs innerhalb des Rohrbodens kommt, so daß Lastwechsel leicht aufgefangen werden können, ohne daß die auftretenden Temperaturschwankungen zu entsprechenden Thermospannungen führen.

In Ausgestaltung sieht die Erfindung weiterhin vor, daß die Rohrbodenbohrung mit den entsprechenden Leitkammerwandbohrungen über Rohrhülsen verbunden sind, wobei diese Rohrhülsen mit einer nitrierbeständigen Innenbeschichtung versehen sind. Weiterhin kann auch vorgesehen sein, daß die nitrierbeständige Beschichtung als Schutzhülse aus nitrierbeständigem Material mit geringerem Außendurchmesser als der Innendurchmesser der Rohrhülsen ausgebildet ist, wobei der Ringraum zwischen Schutzhülse und Rohrhülse mit einer Isolierung versehen ist. Zweckmäßig ist es, wenn die Schutzhülse und die Isolierung durchgehend von der Leitkammerwand bis in das jeweilige Wärmetauscherrohr ausgebildet ist.

Die Erfindung ist nachstehend anhand der Zeichnung beispielsweise näher erläutert. Diese zeigt in

Figur 1 einen schematischen Schnitt durch die Gesamtvorrichtung,

Figur 2 ein Ausführungsbeispiel der Erfindung im Bereich des Rohrbodens im Schnitt, in vergrößertem Maßstab,

Figur 3 ein weiteres Ausführungsbeispiel der Erfindung in der Darstellung gemäß Fig. 2 mit dem Rohrboden vorgelagerter Leitkammer,

Figuren 4 und 5 weitere Ausführungsbeispiele der Erfindung in der Darstellung gemäß Fig. 2.

Die allgemein mit 1 bezeichnete Vorrichtung besteht aus einer Vorkammer 2 mit einem druckfesten Kammergehäuse 3, welches mit einem Rohrboden 4 verschweißt ist, sowie aus der Wärmetauscherkammer 5 mit dem Wärmetauschergehäuse 6, welches ebenfalls am Rohrboden 4 in der vereinfacht wiedergegebenen Darstellung verschweißt ist.

Der drucktragende Eintrittsstutzen 7 im Kammergehäuse 3 für den Eintritt des heißen Kreislaufgases (die Zustandsgrößen an diesem Stutzen betragen ungefähr 420° bis 500 °C und 150 bis 320 bar) trägt auch den verjüngten Teil 8 einer Beaufschlagungsglocke 9, die das heiße Kreislaufgas den Wärmetauscherrohren 10 zuleitet, im dargestellten Beispiel im zentralen Bereich der Vorrichtung. Die Wärmetauscherrohre 10 sind, wie von den mit 11 bezeichneten Pfeilen angedeutet, gekrümmt in der Wärmetauscherkammer 5 angeordnet und führen das Kreislaufgas zunächst durch den Rohrboden in die Wärmetauscherkammer 5 und dann zurück in die Vorkammer 2. Von dort wird das gekühlte Kreislaufgas durch einen mit 12 bezeichneten Gasaustrittsstutzen aus der Vorrichtung 1 ausgeleitet.

Das zu verdampfende Wasser bzw. Kesselspeisewasser wird über einen Einlaßstutzen 13 der Wärmetauscherkammer 5 zugeführt, an den heißen Wärmetauscherrohren 10 verdampft und im Gasdom 14 der Vorrichtung über den Stutzen 15 als Dampf abgezogen.

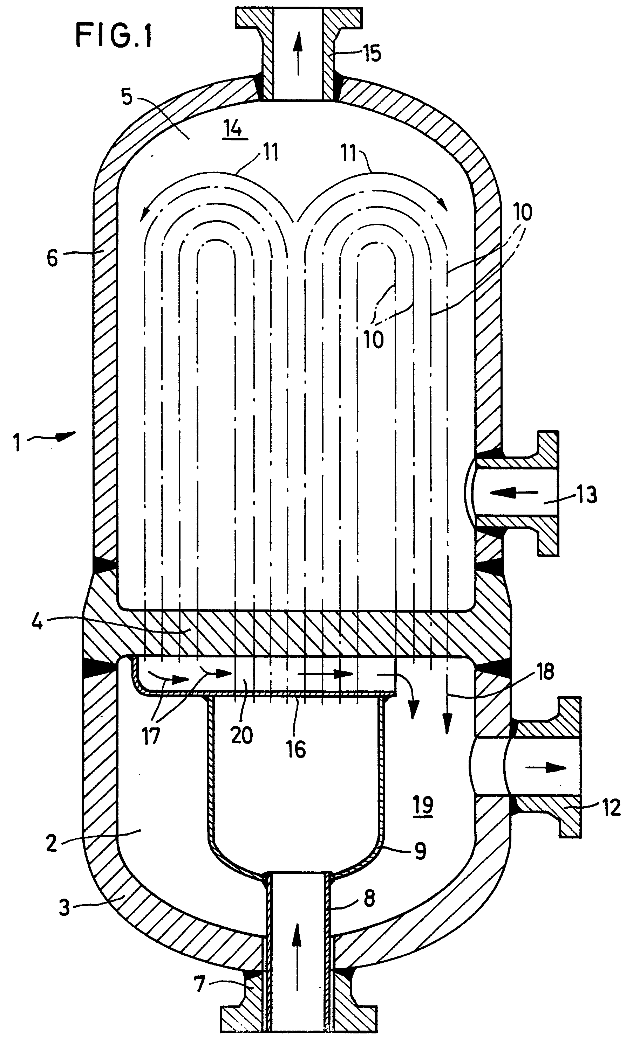

Wie sich aus Fig. 1 noch ergibt, beaufschlagt im dort dargestellten Beispiel die Glocke 9 nicht direkt den Rohrboden 4, sondern eine Leitkammerwand 16, die einen großen Teil des gekühlten, in die Vorkammer eintretenden Kreislaufgases zunächst am Rohrboden 4 entlang leitet, was durch die Pfeile 17 angedeutet ist und schließlich diesen Gasstrom zusammen mit dem dort direkt eintretenden gekühlten Gasstrom (Pfeil 18) in den Vorkammerraum 19 abgibt, der zwischen Kammergehäuse 3 und Glocke 9 gebildet ist. Zur besseren Verwirbelung und Vergleichmäßigung der Strömung im Vorkammerbereich 19 können dort noch Leitbleche oder sonstige Leitmittel vorgesehen sein, was jedoch nicht näher dargestellt ist. Die Glocke 9 sowie die Leitkammerwand 16 der mit 20 bezeichneten Leitkammer bestehen aus nitrierbeständigem Werkstoff bzw. sind mit einer entsprechenden Beschichtung wenigstens auf der heißen Seite versehen, was nicht näher dargestellt ist.

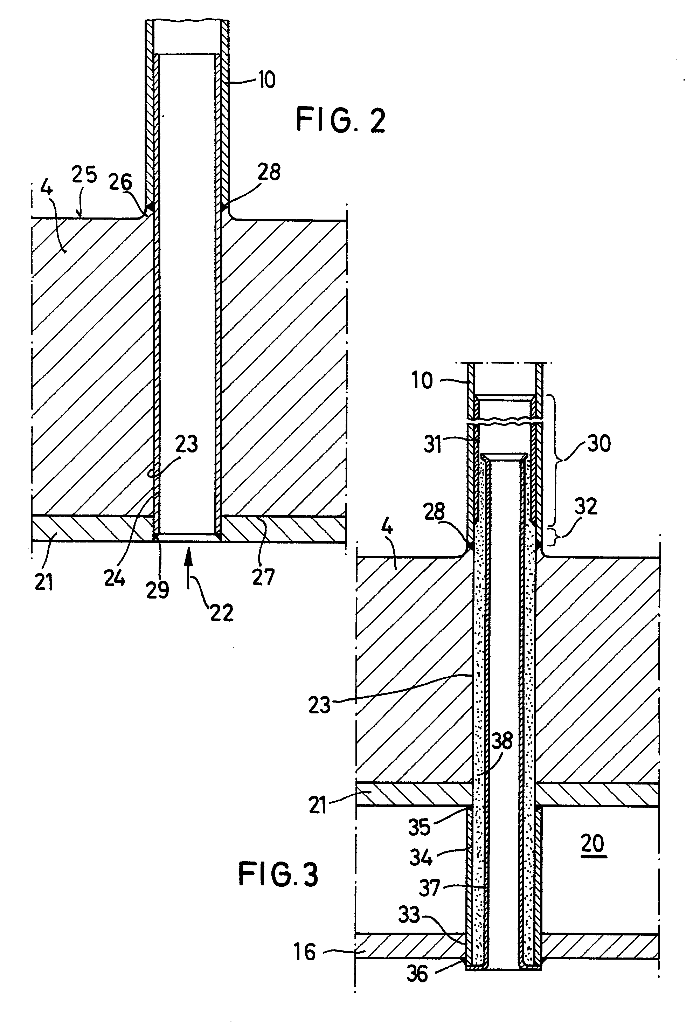

In Fig. 2 ist der Rohrboden 4 mit einer nitrierbeständigen Plattierung 21 auf der « Heißen Seite » versehen. Der Eintritt des Heißen Kreislaufgases ist mit dem Pfeil 22 angedeutet. Jede Rohrbodenbohrung 23 des heißen Teils ist mit einer Beschichtung 24 aus nitrierbeständigem Werkstoff ausgerüstet.

Wie sich aus Fig. 2 auch ergibt, ist auf der Rückseite 25 des Rohrbodens 4 um die Rohrbodenbohrung 23 eine Ringwulst 26 oder ein sonstiges Schweißhilfsmittel vorgesehen, auf welches das in Fig. 2 allgemein mit 10 bezeichnete Wärmetauscherrohr mit Hilfe einer ferritischen Schweißnaht von der Vorderseite 27 des Rohrbodens 4 her mit diesem verschweißt ist. Diese Art der Schweißung wird allgemein mit Hinterbodenschweißung bezeichnet. Der Ausdruck « ferritische Schweißnaht » soll besagen, daß die Materialien des Rohrbodens 4 und des Wärmetauscherrohres 10, die durch die Schweißnaht 28 miteinander verbunden sind, schweißtechnisch gleichartig sind.

Die Beschichtung 24 aus nitrierbeständigem Werkstoff reicht soweit in das Wärmetauscherrohr 10 hinein, daß der Bereich der ferritischen Schweißnaht 28 überdeckt ist. Die Beschichtung 24 kann beispielsweise mit Hilfe einer entsprechenden Verschweißung über eine Schweißnaht 29 mit der Plattierung 21 verschweißt sein, so daß ein Zutritt von Kreislaufgas zur Wand der Rohrbodenbohrung 23 unterbunden ist.

In Fig. 3 ist ein abgewandeltes Ausführungsbeispiel der Erfindung dargestellt, und zwar mit einer dem Rohrboden 4 auf der « heißen Seite » vorgeschalteten Leitkammer 20.

Das Wärmetauscherrohr 10 ist über einen Bereich als Verbundrohr 30 ausgeführt, was in Fig. 3 mit der geschwungenen Klammer angedeutet ist. Die Länge des Verbundrohres 30 richtet sich nach den Betriebszuständen des jeweiligen Wärmetauschers und ist insbesondere so gewählt, daß die Innenwandtemperatur des Wärmetauscherrohres am Ende des Verbundbereiches unterkritisch ist. Die nitrierbeständige Beschichtung 31 ist im Bereich der Schweißnaht 28 geringfügig abgearbeitet, was mit einer kleinen, geschwungenen Klammer 32 angedeutet ist.

Wie sich weiter aus Fig. 3 ergibt, ist die Leitkammerwand 16 jeweils mit gegenüber den Rohrbodenbohrungen 23 fluchtenden Bohrungen 33 versehen, durch die Rohrhülsen 34 gesteckt sind, die einerseits über eine Schweißnaht 35 mit der Plattierung 21 und andererseits über die Schweißnaht 36 mit der Leitkammerwand 16 verschweißt sind.

In die Rohrhülse 34 ist eine Schutzhülse 37 aus nitrierbeständigem Werkstoff eingeschoben und ggf. mit dem freien Ende der Hülse 34 durch Rollen bzw. Anschweißen verbunden, was nicht näher dargestellt ist. Die Schutzhülse 37 durchsetzt sowohl die Rohrhülse 34 als auch den Rohrboden 4 und ragt so weit in das Verbundrohr 30 bzw. das Wärmetauscherrohr 10 ein, daß sowohl die Schweißnaht 28 als auch der abgetragene Bereich 32 der Beschichtung 31 des Verbundrohres 30 überragt ist, wie sich aus Fig. 3 ergibt. Die Hülse 37 weist dabei einen geringeren Außendurchmesser als die Innenbohrung des Rohrbodens 23 bzw. der Rohrhülse 34 auf. Der so entstehende Ringraum ist mit einer Isolierung 38 ausgefüllt, die insbesondere den Wärmedurchgang vom Inneren der Schutzhülse 37 nach außen verhindern soll.

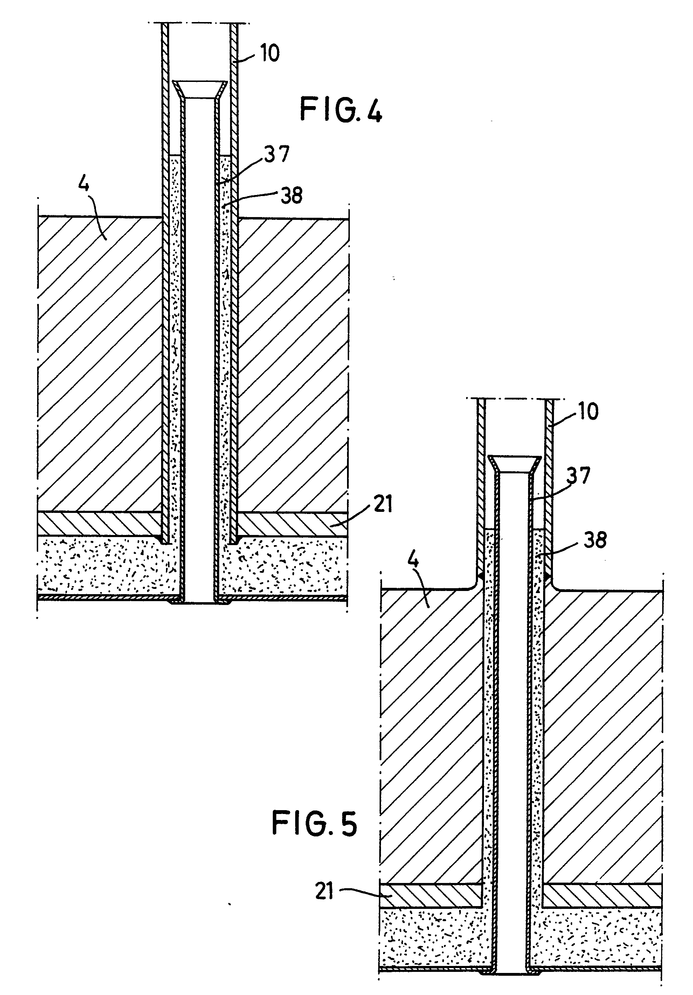

Die Fig. 4 und 5 zeigen weitere Ausführungsbeispiele, die funktionsmäßig gleichen Teile tragen die gleichen Bezugsziffern gemäß der obigen Beschreibung.

Natürlich ist das beschriebene Ausführungsbeispiel in vielfacher Hinsicht abzuändern, ohne den Grundgedanken der Erfindung zu verlassen. So ist die Erfindung insbesondere nicht auf die Verwendung spezieller Werkstoffe, sei es spezieller Stähle oder speziellen Isolierungs- bzw. Beschichtungsmaterials, beschränkt, auch nicht auf die besondere Führung des Prozeßgases oder des Wassers.

**Ansprüche**

1. Vorrichtung (1) zum Wärmetausch zwischen einen $NH_3$-Konverter verlassendem Kreislaufgas und Wasser, mit vom Kreislaufgas durchströmten Wärmetauscherrohren (10), die gasdicht an einem mit einer Plattierung (21) versehenen, die Vorrichtung (1) in eine druckfeste Vorkammer (19) und eine Wärmetauscherkammer (5) teilenden Rohrboden (4) verbunden sind, mit einer das heiße Kreislaufgas dem Rohrboden (4) zuführenden, von kaltem Kreislaufgas außengekühlten Glocke (9), dadurch gekennzeichnet, daß als Wärmetauscherrohre (10) solche aus ferritischem Stahl verwendet werden, die bis zur Rückseite (25) des Rohrbodens (4) als Verbundrohre mit einer nitrierbeständigen Innenbeschichtung (24, 31) versehen sind, wobei die Wärmetauscherrohre auf der Rückseite (25) des Rohrbodens (4) mit diesem verschweißt sind und jede Rohrbodenbohrung (23) des Heißgaseintrittsbereiches ebenfalls mit der Beschichtung aus nitrierbeständigem Werkstoff versehen ist.

2. Vorrichtung nach Anspruch 1, dadurch gekennzeichnet, daß als nitrierbeständige Beschichtung eine Schutzhülse (37) aus nitrierbeständigem Werkstoff in die Rohrbodenbohrung (23) eingeführt ist, die einen geringeren Außendurchmesser als die Rohrbodenbohrung aufweist und daß der Ringraum zwischen der Rohrbodenbohrungswand und der Schutzhülse (37) mit einer Wärmeisolierung (38) ausgefüllt ist.

3. Vorrichtung nach Anspruch 2, dadurch gekennzeichnet, daß die Schutzhülse (37) mit der Wärmeisolierung (38) bis in die Wärmetauscherrohre (10) ragt.

4. Vorrichtung nach Anspruch 2, dadurch gekennzeichnet, daß die Schutzhülse (37) mit der Wärmeisolierung (38) bis in die Verbundrohre (30) reicht.

5. Vorrichtung nach einem der vorangehenden Ansprüche, dadurch gekennzeichnet, daß zur ferritischen Verbindbarkeit des Verbundrohres (30) mit dem Rohrboden (4) die Beschichtung (31) des Verbundrohres (30) in der Montagelage im Verbindungsnahtbereich (32) abgearbeitet ist und dieser Bereich in der Gebrauchslage von der Wärmeisolierung (38) überdeckt ist.

6. Vorrichtung nach einem der vorangehenden Ansprüche, dadurch gekennzeichnet, daß die Wärmetauscherrohre (10) bis zur Stelle der für die Nitrierung unterkritischen Wandtemperatur als Verbundrohre (30) ausgebildet sind.

7. Vorrichtung nach Anspruch 1, dadurch gekennzeichnet, daß der Rohrboden (4) mit einer Kaltgas-Leitkammer (20) versehen ist und die Glocke (9) mit der Leitkammerwand (16) gasdicht verschweißt ist, wobei in der Gebrauchslage die von Heißgas beaufschlagten Rohrbodenbohrungen (23) mit entsprechenden Bohrungen (33) in der Leitkammerwand (16) gasdicht verbunden sind.

8. Vorrichtung nach Anspruch 7, dadurch gekennzeichnet, daß die Rohrbodenbohrungen (23) mit den entsprechenden Leitkammerwandbohrungen (33) über Rohrhülsen (34) verbunden sind, wobei diese Rohrhülsen (34) mit einer nitrierbeständigen Innenbeschichtung versehen sind.

9. Vorrichtung nach Anspruch 8, dadurch gekennzeichnet, daß die nitrierbeständige Beschichtung als Schutzhülse (37) aus nitrierbeständigem Material mit geringerem Außendurchmesser als der Innendurchmesser der Rohrhülse (34) ausgebildet ist, wobei der Ringraum zwischen Schutzhülse und Rohrhülse mit einer Isolierung (38) versehen ist.

10. Vorrichtung nach Anspruch 9, dadurch gekennzeichnet, daß die Schutzhülsen (37) und die Isolierung (38) durchgehend von der Leitkammerwand (16) bis in die Wärmetauscherrohre (10) ausgebildet sind.

**Claims**

1. Apparatus (1) for heat exchange between circulation gas leaving an $NH_3$-converter, and water, comprising heat exchange pipes (10) through which flows the circulation gas and which are gas-tightly connected to a pipe end portion (4) which is provided with plating (21) and which divides the apparatus (1) into a pressure-resistant pre-chamber (19) and a heat exchange chamber (5), a bell member (9) which feeds the hot circulation gas to the end portion (4) and which is externally cooled by cold circulation gas, characterised in that the heat exchange pipes (10) used are made of ferritic steel and, as far as the back (25) of the end portion (4), are provided in the form of composite pipes with a nitriding-resistant internal coating (24, 31), wherein the heat exchange pipes are welded to the end portion (4) on the back (25) of the end portion (4) and each pipe end portion bore (23) in the hot gas intake region is also provided with a coating of nitriding-resistant material.

2. Apparatus according to claim 1 characterised in that a protective sleeve (37) comprising nitriding-resistant material is introduced into the pipe end portion bore (23), to act as the nitriding-resistant coating, said sleeve being of smaller outside diameter than the pipe end portion bore, and that the annular space between the wall of the pipe end portion bore and the protective sleeve (37) is filled with a heat insulation (38).

3. Apparatus according to claim 2 characterised in that the protective sleeve (37) projects with the heat insulation (38) into the heat exchange pipes (10).

4. Apparatus according to claim 2 characterised in that the protective sleeve (37) with the heat insulation (38) extends into the composite pipes (30).

5. Apparatus according to one of the preceding claims characterised in that, in order to make a ferritic connection between the composite pipe (30) and the end portion (4), the coating (31) of the composite pipe (30) is removed in the assembly position in the connecting join region (32), and said region is covered in the position of use by the heat insulation (38).

6. Apparatus according to one of the preceding claims characterised in that the heat exchange pipes (10) are formed as composite pipes (30) as far as the location of the wall temperature which is sub-critical in regard to nitriding.

7. Apparatus according to claim 1 characterised in that the end portion (4) is provided with a cold gas guide chamber (20) and the bell member (9) is gas-tightly welded to the wall (16) of the guide chamber (20), wherein in the position of use the end portion bores (23) which are acted upon by hot gas are gas-tightly connected to corresponding bores (33) in the wall (16) of the guide chamber.

8. Apparatus according to claim 7 characterised in that the end portion bores (23) are connected to the corresponding bores (33) in the wall of the guide chamber (20) by way of tubular sleeves (34), said tubular sleeves (34) being provided with a nitriding-resistant internal coating.

9. Apparatus according to claim 8 characterised in that the nitriding-resistant coating is formed as a protective sleeve (37) comprising nitriding-resistant material, of smaller outside diameter than the inside diameter of the tubular sleeve (34), wherein the annular space between the protective sleeve and the tubular sleeve is provided with an insulation (38).

10. Apparatus according to claim 9 characterised in that the protective sleeves (37) and the insulation (38) are continuous from the wall (16) of the guide chamber into the heat exchange pipes (10).

**Revendications**

1. Dispositif (1) pour l'échange thermique entre un gaz en circulation sortant d'un convertisseur de $NH_3$ et de l'eau, avec des tubes (10) d'échange thermique parcourus par le gaz en circulation et reliés de manière étanche aux gaz à un fond tubulaire (4) muni d'un placage (21) et subdivisant le dispositif (1) en une chambre d'amont (2) résistant à la pression et en une chambre (5) d'échange thermique, avec une cloche (9) dirigeant le gaz chaud en circulation vers le fond tubulaire (4) et refroidie de l'extérieur par du gaz froid du circuit, caractérisé par le fait qu'on utilise en guise de tubes (10) d'échange thermique de tels tubes en acier ferritique qui sont pourvus jusqu'à la face postérieure (25) du fond tubulaire (4), en tant que tubes composites, d'un revêtement interne (24, 31) résistant à la nitruration, les tubes d'échange thermique étant soudés à la face postérieure (25) du fond tubulaire (4) et chaque alésage (23) du fond tubulaire de la zone d'entrée du gaz chaud étant également muni du revêtement en matériau résistant à la nitruration.

2. Dispositif selon la revendication 1, caractérisé par le fait que, en guise de revêtement résistant à la nitruration, est introduit dans l'alésage (23) du fond tubulaire un fourreau protecteur (37) en un matériau résistant à la nitruration, qui présente un diamètre externe plus petit que l'alésage du fond tubulaire ; et par le fait que l'espace annulaire entre la paroi de l'alésage du fond tubulaire et le fourreau protecteur (37) est empli d'un isolant thermique (38).

3. Dispositif selon la revendication 2, caractérisé par le fait que le fourreau protecteur (37) avec l'isolant thermique (38) s'étend jusque dans les tubes (10) d'échange thermique.

4. Dispositif selon la revendication 2, caractérisé par le fait que le fourreau protecteur (37) avec l'isolant thermique (38) se prolonge jusque dans les tubes composites (30).

5. Dispositif selon l'une des revendications précédentes, caractérisé par le fait que, en vue de l'aptitude à la liaison ferritique du tube composite (30) avec le fond tubulaire (4), le revêtement (31) du tube composite (30) est dépouillé dans la position de montage dans la zone (32) de la soudure de jonction et cette zone est recouverte par l'isolant thermique (38) dans la position d'utilisation.

6. Dispositif selon l'une des revendications précédentes, caractérisé par le fait que les tubes (10) d'échange thermique sont réalisés sous la forme de tubes composites (30) jusqu'à l'endroit de la température de la paroi qui est sous-critique pour la nitruration.

7. Dispositif selon la revendication 1, caractérisé par le fait que le fond tubulaire (4) est doté d'une chambre (20) déflectrice de gaz froid et la cloche (9) est soudée de manière étanche aux gaz à la paroi (16) de cette chambre déflectrice, les alésages (23) du fond tubulaire sollicités par le gaz chaud dans la position d'utilisation étant reliés de manière étanche aux gaz à des alésages correspondants (33) dans la paroi (16) de la chambre déflectrice.

8. Dispositif selon la revendication 7, caractérisé par le fait que les alésages (23) du fond tubulaire sont reliés aux alésages correspondants (33) de la paroi de la chambre déflectrice par l'intermédiaire de douilles tubulaires (34), ces douilles tubulaires (34) étant munies d'un revêtement interne résistant à la nitruration.

9. Dispositif selon la revendication 8, caractérisé par le fait que le revêtement résistant à la nitruration est réalisé sous la forme d'un fourreau protecteur (37) en une matière résistant à la nitruration avec un diamètre externe plus petit que le diamètre interne de la douille tubulaire (34), l'espace annulaire entre le fourreau protecteur et la douille tubulaire étant doté d'un isolant (38).

10. Dispositif selon la revendication 9, caractérisé par le fait que les fourreaux protecteurs (37) et l'isolant (38) sont réalisés ininterrompus de la paroi (16) de la chambre déflectrice jusque dans les tubes (10) d'échange thermique.

FIG.1

0 042 028

FIG. 2

FIG. 3

FIG. 4

FIG. 5

3